# EUROPEAN PATENT SPECIFICATION

(11) **EP 3 447 994 B1**
(45) Date of publication and mention of the grant of the patent: **06.05.2020**
(21) Application number: 17382428.5
(22) Date of filing: 03.07.2017
(51) Int. Cl.: H04W 4/80, H04B 5/00, H04L 29/08, H04W 4/00

(54) **WIRELESS COUPLING FOR COUPLING A VEHICLE WITH AN ELECTRONIC DEVICE DISPOSED IN AN INTERIOR PART OF THE VEHICLE**
DRAHTLOSE KOPPLUNG ZUR KOPPLUNG EINES FAHRZEUGS MIT EINER ELEKTRONISCHEN VORRICHTUNG IN EINEM INNENTEIL DES FAHRZEUGS
COUPLAGE SANS FIL D'UN VÉHICULE À UN DISPOSITIF ÉLECTRONIQUE DISPOSÉ DANS UNE PARTIE INTÉRIEURE DU VÉHICULE

(43) Date of publication of application: 27.02.2019
(73) Proprietor: Grupo Antolin Ingenieria, S.A.U., 09007 Burgos (ES)
(72) Inventor: PÉREZ VALLEJO, Álvaro, 09007 Burgos (ES); GARCÍA PÉREZ, Óscar, 09007 Burgos (ES)
(74) Representative: Balder IP Law, S.L.

(56) References cited:
- WO-A1-2010/025157
- US-A1- 2010 201 189
- TECK CHUAN BEH ET AL: "Basic study of improving efficiency of wireless power transfer via magnetic resonance coupling based on impedance matching", INDUSTRIAL ELECTRONICS (ISIE), 2010 IEEE INTERNATIONAL SYMPOSIUM ON, IEEE, PISCATAWAY, NJ, USA, 4 July 2010 (2010-07-04), pages 2011-2016, XP031803111, DOI: 10.1109/ISIE.2010.5637484 ISBN: 978-1-4244-6390-9

## Description

### TECHNICAL FIELD

The present invention pertains to the field of coupling a vehicle and electronic devices integrated in interior parts mounted inside the vehicle. More particularly, it refers to those interior parts having electronic devices, like sensors, signaling lights, lightings, actuators, among others, which need be coupled to a vehicle, for its feeding/powering and/or for data exchanging inside the vehicle, in a wireless way.

### STATE OF THE ART

Vehicle interior parts often comprise electronic devices.

These electronic devices must be coupled to the vehicle for providing them at least electric feeding, and transmitting some basic info, like passive device identification, simple commanding instructions, or state change info. Sometimes, this information could include more complex communication between an electronic device and the vehicle, exchanging more complex monitoring, or commanding data, using for instance a CAN bus standard.

Typically, these electronic devices are connected to the vehicle by a wired circuit, which involves complex designs for the layout of the wires and the use of connectors, increasing costs and weight. These wired circuits demand much room available inside the vehicle interior, this way, penalizing the interior vehicle habitability, which in turn requires great design and implementation efforts due to these space constraints inherent to the vehicle structure.

As an alternative to wired connections, there are some wireless couplings for either, communicating an electronic device with the vehicle CPU, or for feeding them. Usually, these wireless couplings have dedicated designs, being either, for transmitting power, but without data transmission, like for instance wireless chargers, or for some kind of more or less complex pure data exchanging, like for instance blue-tooth technology.

Patent US2017158063 can be an example of a wireless charging system for vehicle. This patent describes a wireless charging system for a vehicle based on the principle of transmitting and receiving electric power using electromagnetic induction or resonance. In this particular case, a high electric power transmission is used to charge a battery applied to an electrical vehicle, and this power transmission is done by improving the charging efficiency, recovering part of the heat generated during the battery charging. Any data transmission is claimed in this patent.

Patent US2014218189 can be another example of prior art, in this case, for data transmission via blue-tooth technology. In this case, it is shown a device for data transmission, but without significant power transmission. This patent describes an apparatus for alerting a user of an item present within a vehicle, by messages exchanged between and active near-field communication device, and a passive near-field communication device, using blue-tooth technology.

Additionally, EMC requirements, jointly with the maximum admissible radiated power level inside the vehicle, add even more complexity to the design of wireless couplings for electronic interior vehicle parts.

Among the possible wireless coupling systems, one known possibility, suitable for vehicle interiors, is the use of a NFC technology. Due to the very short-range of this kind of couplings, it is relatively easy to comply with EMC requirements, but one problem with these systems is that they usually are not aimed for transmitting big amounts of power, and then, they are not able to transmit enough power for feeding electronics devices.

Besides, unlike in other environments, in a vehicle the cited functionalities must be performed following very demanding requirements, constraints, and high communication quality levels. Maintaining such high quality levels of signal is usually achieved by the use of tailor-made, dedicated devices.

The wireless coupling requires the tuning of the frequency chosen for the transmission of data between the both sides to be coupled, one in the vehicle, and the other in the vehicle interior part where the electronic device is assembled. This in turn requires the matching of the impedances at both ends, as proposed for example in US2010/0201189A1. One problem related to this, is that some factors may cause different impedance variations at both sides, and consequently an impedance mismatch for the chosen transmission frequency, what affects the quality and intensity of the signals transmitted.

Among others, these factors can be related to the relative position between both sides, mainly the distance between the antenna of electronic device and the antenna of the vehicle, the placement of the coupling device inside the vehicle, and related with this the distribution of metal parts of the vehicle surrounding it, what deviates the effective impedances of the antennas at such working conditions, from their theoretical values, modifying as well the total impedances of their corresponding transceivers, and this way causing a mismatch between them, dismissing the quality and the efficiency of the coupling between both ends.

Other factors can be related with the environmental conditions, like the ambience humidity and the temperature, the components ageing, or the different kinds of inner part and vehicle models to be coupled. This implies that, on one hand, there is always a loss of quality regarding the theoretical behavior, and on the other hand, such wireless devices must be designed ad-hoc, depending on the vehicle brand and model, lacking standardization, what significantly increases development complexity and manufacturing costs.

### DESCRIPTION OF THE INVENTION

The device described in the present disclosure intends to solve the shortcomings of prior-art devices for wirelessly coupling a vehicle and electronic devices attached or integrated in a vehicle interior part inside the vehicle. The wireless coupling comprises simultaneously data exchange by means of a RF signal, between the electronic devices and the vehicle, and simultaneously feeding the electronic devices from said vehicle. At the same time, this device maximizes the degree of standardization, minimizing this way additional cost and design efforts, needed either, for adapting a same wireless coupling to different designs and configurations, or for compensating impedance deviations due to ageing of the components and to environmental factors.

The invention provides a wireless coupling based on NFC (Near Field Communication) technology, working at a given transmission frequency.

A first aspect of the invention relates to a wireless coupling, comprising:
a first-end powering transceiver located in a fixed position within the vehicle and showing certain first-end impedance Z₁ when working at the transmission frequency and
a second-end powered transceiver configured to be disposed in the vehicle interior part in which said electronic device is disposed, said electronic device being connected to the second-end powered transceiver. The second-end powered transceiver being configured to operate at a radio frequency range emitted by the first-end antenna of the first-end powering transceiver. The second-end powered transceiver showing certain second-end impedance Z₂ when working at the transmission frequency.

The first-end powering transceiver comprising:
connection means electrically connectable to a wiring system of the vehicle,
a first-end ECU,
a first-end RF transceiving means,
a first-end EMC filter, and
a first-end antenna with a theoretical first-end antenna impedance Z₁ₜₐ at the transmission frequency.

The second-end powered transceiver comprises
a second-end RF transceiving means and
a second-end antenna showing certain theoretical second-end antenna impedance Z₂ₜₐ at the transmission frequency;

According to the invention, the wireless coupling comprises a matching circuit with an impedance Zc, said matching circuit being arranged to compensate any deviation from the theoretical first-end impedance Z₁ₜₐ, or from the theoretical second-end impedance Z₂ₜₐ, due to real working conditions. The matching circuit is connected to the first-end antenna, or to the second-end antenna, this first-end antenna or second-end antenna, having respectively a first-end antenna design impedance Z_{1da} , or a second-end antenna design impedance Z_{2da}, more inductive than the corresponding theoretical impedance Z₁ₜₐ of the first-end antenna or than the theoretical impedance Z₂ₜₐ of the second-end antenna, such that the combination of the design impedance Z_{1da} of the first-end antenna or of the design impedance Z_{2da} of the second-end antenna, and the impedance Z_{c} of the matching circuit, matches the theoretical first-end antenna impedance Z₁ₜₐ or the theoretical second-end antenna impedance Z₂ₜₐ.

Thus all the impedances within either, the first-end transceiver, or the second-end transceiver, are rebalanced to its theoretical design conditions, matching the first-end impedance Z₁ with the second-end impedance Z₂ and this way optimizing the quality and the efficiency of the coupling under real working conditions.

The matching circuit comprises at least one capacitive component.

In this text, the term "powering" refers to the capacity or functionality of a transceiver to provide power/energy to feed a remote transceiver, referred to in this text as "powered transceiver". According to this, the first-end powering transceiver is somehow fed by the power system of the vehicle, and part of its power is wirelessly transmitted to the second-end powered transceiver, and consequently to the electronic device connected to it.

In some embodiments the second-end powered transceiver can comprise a second-end ECU for the processing of orders and data either, from the vehicle, or from the electronic device connected to the second-end powered transceiver.

In some embodiments, the first-end ECU of the first-end powering transceiver comprises the first-end RF transceiving means.

The vehicle interior part to which the electronic device is associated can be detachable from the vehicle either, for repair and replacement purposes, or for allowing the occupants placing it according to their preferences of use.

In some embodiments, the data exchange comprises data and/or instructions sent from de vehicle to the electronic device of the vehicle interior part.

In some embodiments, the data exchange comprises data and/or instructions sent from the electronic device of the vehicle interior part to the vehicle.

In some embodiments, the data exchange comprises data and/or instructions exchange in a bidirectional way.

In some embodiments, the first-end powering transceiver can be configured to passively detect and/or identify the second-end powered transceiver, and consequently the corresponding interior part when it is coupled to the vehicle, that is, without any active data transmission from the second-end powered transceiver. For this function, the first-end powering transceiver can be preferably configured to passively identify the second-end powered transceiver as a RFID tag.

In some preferred embodiments, the Near Field Communication (NFC) technology is a Radio Frequency Identification (RFID) technology, working in the frequency band of 13.56 MHz.

In some preferred embodiments, the first-end antenna and/or said second-end antenna are respectively implemented by means of a loop.

In some embodiments the second-end powered transceiver, comprises a memory configured to store data associated to the second-end powered transceiver and/or the electronic device disposed in the vehicle interior part to which the second-end powered transceiver is attachable.

In some embodiments, the second-end powered transceiver comprises a battery configured to be rechargeable from power harvested from the RF signal emitted by the first-end powering transceiver.

Additionally, in some embodiments, the memory of the second-end powered transceiver can be powered by the battery. That means, for instance, that it is possible to keep the electronic device connected to the second-end powered transceiver working when it is detached from the vehicle, and then, allowing changing the position of the vehicle interior part inside the vehicle, keeping its configuration, even for taking it to be used outside the vehicle.

In some embodiments of the invention, the impedance matching circuit can be self-adjusting, tuning its capacitive impedance to compensate any mismatch related to impedance variations due to design, environmental, or ageing factors.

In a preferred embodiment, the impedance matching circuit is comprised in the first-end powering transceiver.

In some embodiments of the invention, for example when the first-end antenna of the first-end powering transceiver is integrated in a metallic environment, a ferrite may be included in order to prevent the electromagnetic field from being absorbed by the metal and to confine the electromagnetic field towards the second-end antenna. The inclusion of a ferrite may be taken into account when establishing permeability parameters, losses and impedance with respect to the frequency of operation.

In some embodiments, the first-end antenna is longer than the second-end antenna. The first-end antenna is configured for either, admitting different positions of a single second-end antenna, or simultaneously coupling several second-end antennas.

In some embodiments, the first-end powering transceiver comprises a plurality of first-end antennas, covering a surface larger than that of the second-end antenna. The first-end antennas are configured for either, admitting different positions of a single second-end antenna or simultaneously coupling several second-end antennas.

Another aspect of the invention relates to a vehicle comprising therein a vehicle interior part comprising an electronic device, the vehicle further comprising the wireless coupling device wherein the first-end powering transceiver is located in a fixed position within the vehicle and the second-end powered transceiver is attached to said vehicle interior part.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a diagram illustrating a wireless coupling device to be disposed inside a vehicle, comprising a first-end powering transceiver and a second-end powered transceiver, in accordance with one embodiment of the invention.
Figure 2 shows in detail a portion of the first-end powering transceiver shown in figure 1.
Figure 3 shows a possible implementation of an antenna loop.
Figure 4 shows a scheme of the equivalent circuit of a second-end powered transceiver in accordance with one embodiment of the invention comprising a matching circuit.
Figure 5 shows a second-end powered transceiver according to an embodiment of the invention.

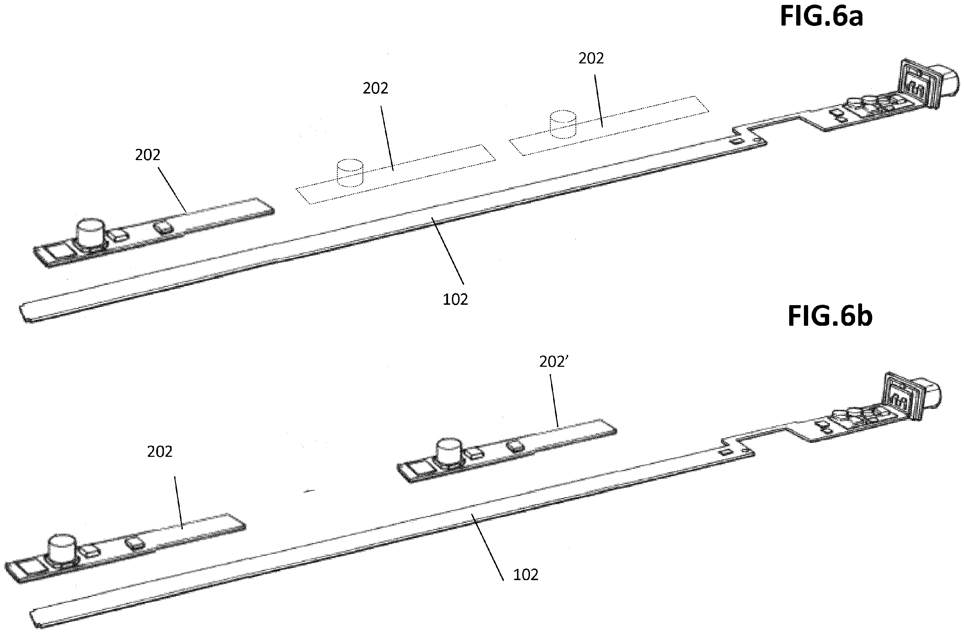

Figure 6a shows a wireless coupling device comprising a first-end antenna longer than the second-end antenna, configured to admit different positions of the single second-end antenna.
Figure 6b shows a wireless coupling device comprising a first-end antenna longer than the second-end antenna, configured for simultaneously coupling several second-end antennas.
Figure 7a shows a first-end powering transceiver comprising a plurality of first-end antennas, covering a surface larger than that of the second-end antenna configured to admit different positions of a single second-end antenna.
Figure 7b shows a first-end powering transceiver comprising a plurality of first-end antennas, covering a surface larger than that of the second-end antenna configured for simultaneously coupling several second-end antennas.
Figure 8a shows the electromagnetic field generated by the first-end powering transceiver and the electromagnetic field generated by the second-end powered transceiver.
Figure 8b shows a dispersion of the electromagnetic field generated by the first-end powering transceiver when the wireless coupling device is surrounding or close to metal parts.
Figure 8c shows the wireless coupling device, wherein the first-end powering transceiver comprises a ferrite configured close to the first-end antenna to confine the electromagnetic field emitted by the first-end powering transceiver towards the second-end antenna of the second-end powered transceiver.

### DESCRIPTION OF A WAY OF CARRYING OUT THE INVENTION

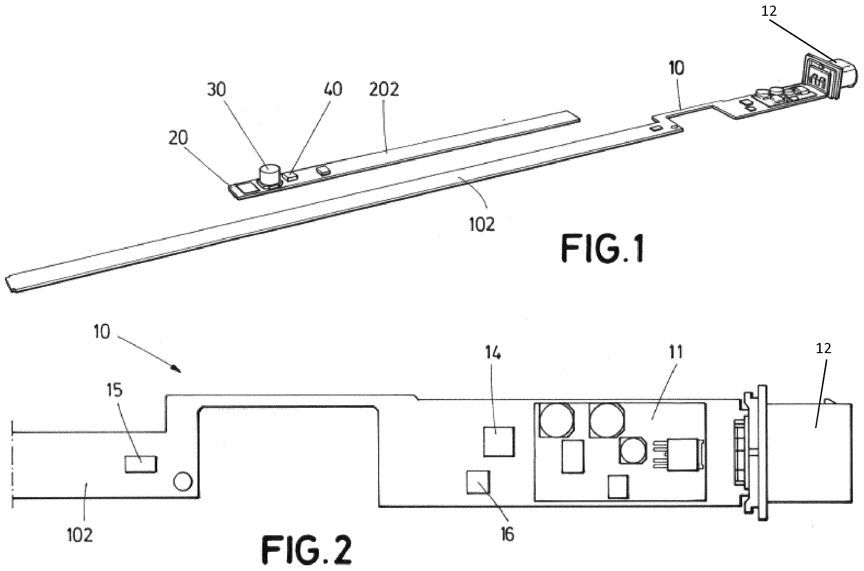

Figure 1 shows a wireless coupling in accordance with one embodiment described in the present disclosure. In the coupling, a first-end powering transceiver 10 communicates with one or more second-end powered transceivers 20, 20' (in figure 1, only one second-end powered transceiver 20 is illustrated). The first-end powering transceiver 10 is preferably located in a fixed position within the vehicle, such as, but without limitation, on the dashboard of the vehicle, on a door trim, on a cargo trim, on a floor carpet, on a pillar, or on the ceiling of the vehicle. The first-end powering transceiver 10 is connected to the wiring system of the vehicle, from which the first-end powering transceiver 10 is powered. Each second-end powered transceiver 20, 20' is designed to be disposed in a vehicle interior part, such as an overhead console, door trim bezel, or others. That is to say, each second-end powered transceiver 20, 20' is associated to or integrated into a vehicle interior part. An electronic device 30 is disposed either, attached to, or integrated in the vehicle interior part in which the second-end powered transceiver 20 is disposed, such that the wireless coupling device enables the vehicle to communicate with the electronic devices 30 disposed in one or more vehicle interior parts.

The wireless coupling implements a Near Field Communication (NFC) technology. Data can be exchanged between the first-end powering transceiver 10 and the one or more second-end powered transceivers 20, 20' via the RF signal.

Figure 2 shows in detail a portion of the first-end powering transceiver 10 with a certain first-end impedance Z₁ when working at the transmission frequency. The first-end powering transceiver 10 comprises: connection means 12 for electrically connect to a wiring system of the vehicle; a first-end ECU 11, a first-end RF transceiving means 14, a first-end EMC filter 16 and a first-end antenna 102 showing a theoretical first-end antenna impedance Z₁ₜₐ at the transmission frequency. The first-end RF transceiving means 14 contains transmitter and receiver circuitries configured to perform the operations associated to the generation and handle of radio transmit signals and radio receive signals, respectively. Examples of such operations are demodulation and filtering of receive signal and modulation and generation of transmit signal.

The second-end powered transceiver 20 is configured to operate within a range of radio frequency of the RF signal emitted by the first-end antenna 102 of the first-end powering transceiver 10. The second-end powered transceiver 20 shows certain second-end impedance Z₂ when working at the transmission frequency. The second-end powered transceiver 20 comprises second-end RF transceiving means 24 and a second-end antenna 202 with a theoretical second-end antenna impedance Z₂ₜₐ at the transmission frequency.

The second-end powered transceiver 20 is powered by the RF signal emitted by the first-end antenna102.

The general operation of the wireless coupling is as follows: the first-end RF transceiving means 14 of the first-end powering transceiver 10 generates and modules in frequency a signal and provides the modulated signal to the first-end antenna 102, which creates an electromagnetic field when it receives the modulated signal. In turn, when the interior part is properly placed in the vehicle at its working position, consequently the second-end antenna 202 is in the electromagnetic field generated by the first-end antenna 102, and additionally to this, the second-end powered transceiver 20 is working within the range of operation of the first-end powering transceiver 10, the second-end powered transceiver 20 receives energy/power emitted by the first-end powering transceiver 10, enabling this way the feeding of the electronic devices 30 connected thereto. Data transmission between both ends is also enabled.

In order for the wireless coupling device to perform correctly, the second-end powered transceiver 20 must be situated within the range of the radio frequency field emitted by the first-end antenna 102 of the first-end powering transceiver 10.

Besides the first-end impedance Z1 of the first-end powering transceiver 10 must be the same as the second-end impedance Z2 of the second-end powering transceiving order for the energy not to be reflected, nor dissipated. In other words, the energy transmission efficiency from the first-end RF transceiving means 14 to the second-end antenna 202 of the second-end powered transceiver 20 is determined by the principle of impedances equality. The problem is that some factors may cause an impedance and/or frequency mismatch, which affects either, the efficiency of the transmission of power from the first-end powering transceiver 10 to the second-end powered transceiver 20, and the quality of the signals emitted and received by both transceivers. Among others, these factors can be, the relative position between the first-end powering transceiver 10 and the one or more second-end powered transceivers 20, 20' mainly the distance between them, the metallic environment in the vehicle surrounding the fist-end antenna 102 and the second-end antenna 202, the environmental conditions, the ageing of the components, the variations in design, materials, and requirements of either, the different kinds of inner part, and the different vehicle models. Thus to achieve a good level of quality of signal and power, ad-hoc first-end powering transceivers 10, and ad-hoc second-end powered transceivers 20,20' must be designed for every combination of vehicle model and vehicle interior part, what impedes the standardization of this kind of coupling devices.

In order to cope with this problem, the wireless coupling of the invention comprises a matching circuit 15 for compensating potential impedance and frequency mismatches. In other words, for matching the impedance and resonant frequency of both ends. This allows the use of the same first-end powering transceiver 10 and second-end powered transceiver 20 for different interior parts and vehicle models. The impedance matching circuit 15 may be comprised either in the first-end powering transceiver 10 or in the second-end powered transceiver 20. Thus, it is possible to choose in which transceiver incorporate the matching circuit 15 and design the other transceiver as a standard circuit, adjusting the impedances of both ends with a simple impedance matching circuit 15. For example if the impedance matching circuit 15 is incorporated in the first-end powering transceiver 10 it is possible to standardize the circuits of the second-end powered transceivers 20, 20' incorporated in the different vehicle interior parts. Even when the transceiver is incorporating the matching circuit 15, only a small part, corresponding to the matching circuit, must be ad-hoc designed for each combination of coupling between a specific interior part and a specific vehicle model, or for a specific application, whilst the rest of the circuit keeps standard.

The matching circuit 15 has an impedance Zc. The matching circuit 15 is disposed to compensate any deviation from the theoretical first-end antenna impedance Z₁ₜₐ, or from the theoretical second-end antenna impedance Z₂ₜₐ, due to real working conditions. This first-end antenna 102 or second-end antenna 202 are manufactured with a first-end antenna design impedance Z_{1da}, or a second-end antenna design impedance Z_{2da}, more inductive than the corresponding theoretical impedance Z₁ₜₐ of the first-end antenna 102 or of the theoretical impedance Z₂ₜₐ of the second-end antenna 202. The combination of the design impedance Z_{1da} of the first-end antenna 102 or of the design impedance Z_{2da} of the second-end antenna 202, and the impedance Z_{c} of the matching circuit 15 matches the theoretical first-end antenna impedance Z₁ₜₐ or the theoretical second-end antenna impedance Z₂ₜₐ.

The matching circuit 15 is advantageously implemented by means of capacitive components, avoiding any use of inductive ones. When the matching circuit 15 is comprised in the first-end powering transceiver 10 the first-end antenna 102 is manufactured to have a design impedance Z_{1da} more inductive than the theoretical impedance Z₁ₜₐ of the first-end antenna 102 and when the matching circuit 15 is comprised in the second-end powered transceiver 20 the second-end antenna 202 is manufactured to have a design impedance Z_{2da} more inductive than the theoretical impedance Z₂ₜₐ of the second-end antenna 102. In some embodiments of the invention, the matching circuit 15 is made of at least one capacitive component.

In preferred embodiments, as shown in figure 2, the matching circuit 15 is implemented at the first-end powering transceiver 10.

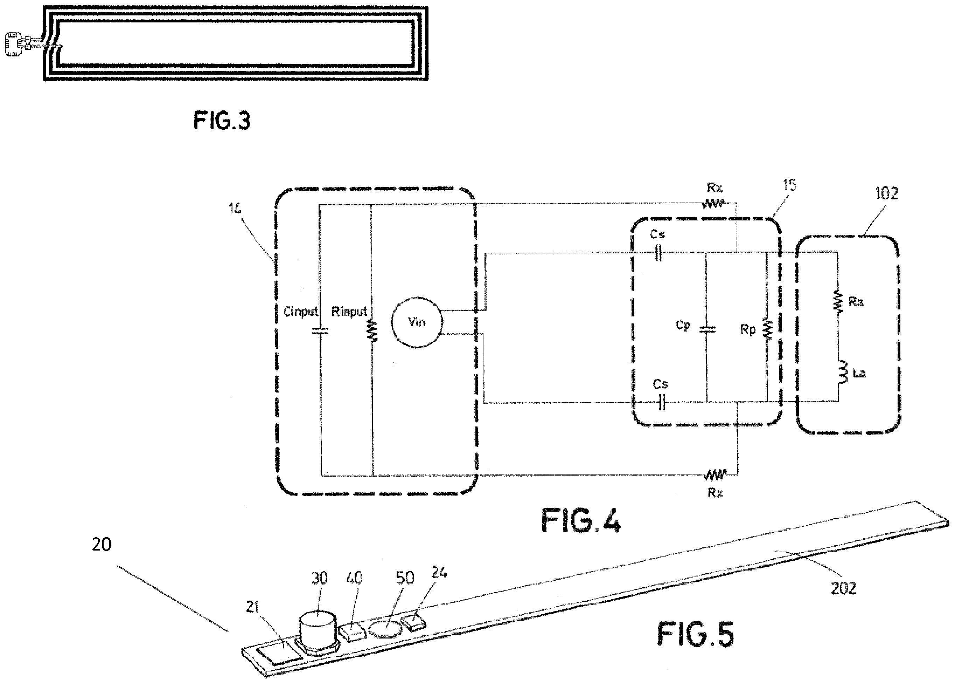

Figure 4 shows a scheme of the equivalent circuit in terms of impedance of the first-end powering transceiver 10 of figure 1, in which the first-end RF transceiving means 14 has been modeled as a voltage source and a C-R group (Cᵢₙₚᵤₜ, Rᵢₙₚᵤₜ, in parallel), the first-end antenna 102 has been modeled as a R-L group (Ra, La, in series). A matching circuit 15, modeled as a R-C group (Cs, Cs, Cp and Rp) has been implemented between the first-end RF transceiving means 14 and the first-end antenna 102.

In some embodiments of the invention the vehicle interior part is detachable by the user, for example, allowing its replacement with other similar interior parts with other functionalities or electronic devices 30, according to the user preferences and configurations, and can be placed as well in different positions inside the vehicle or even used outside the vehicle. The vehicle interior part in which the second-end powered transceiver 20 is disposed may comprise one or more electronic devices 30 (sensors, actuators, batteries, displays, tablets or others).

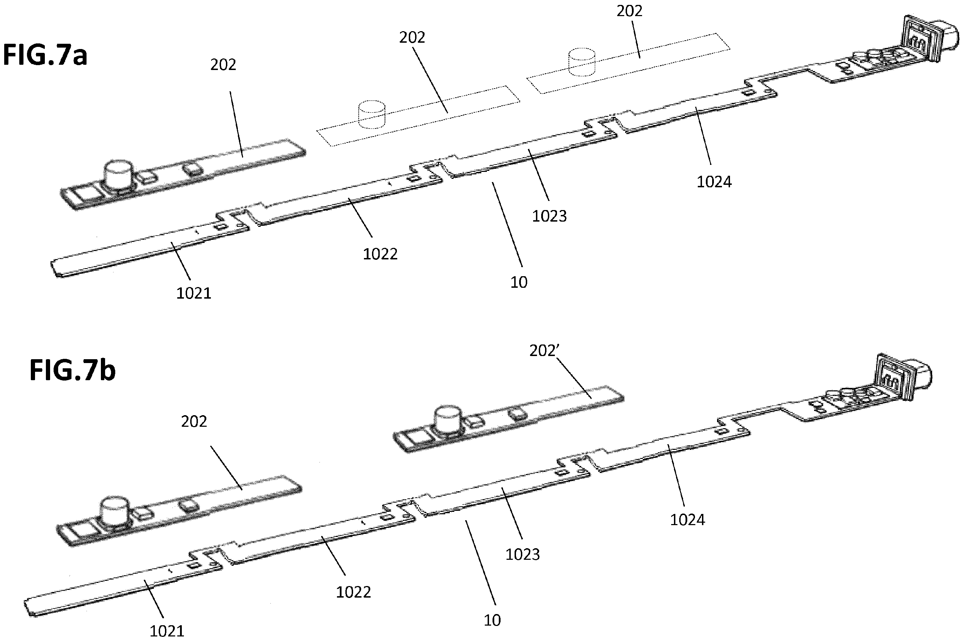

In some embodiments, the first-end powering transceiver 10 is larger than the second-end powered transceiver 20, in such a way that it allows different relative working positions for the vehicle interior part in the vehicle. In those cases, the first-end powering transceiver 10 can advantageously consist of a combination of several first-end antennas 1021, 1022, 1023, 1024 as shown in figures 7a and 7b.

Turning back to figure 1, the electronic device 30 disposed in the vehicle interior part and connected to the second-end powered transceiver 20 is powered from the RF signal emitted by the first-end powering transceiver 10, at the time that it exchanges some data with the vehicle (CPU).

The first-end powering transceiver 10 may transmit data and/or instructions from the vehicle to the electronic device 30 of the vehicle interior part through the second-end powered transceiver 20 to which the electronic device 30 is connected.

The second-end powered transceiver 20 may transmit data and/or instructions from the electronic device 30 of the vehicle interior part to the vehicle (through the first-end powering transceiver 10, which receives the data and/or instructions from the second-end powered transceiver 20).

The first-end powering transceiver 10 and the second-end powered transceiver 20 may be configured to exchange data and/or instructions in a bidirectional way.

In preferred embodiments, the Near Field Communication (NFC) technology is a RFID technology, operable in the frequency band of 13.56 MHz.

The first-end powering transceiver 10 may passively detect and identify the second-end powered transceiver 20 as a RFID tag once both transceivers are coupled each other, that is, when the second-end antenna 202 is working within the radio frequency range of the RF signal, and within the scope of the electromagnetic field generated by the first-end antenna 102. This way, it is possible to detect when the interior part is coupled, which interior part is coupled, and even in which position the interior part is coupled.

The second-end powered transceiver 20 can comprise a memory 40 configured to store data associated to the second-end powered transceiver 20 and/or data associated to the electronic device 30 disposed in the vehicle interior part to which the second-end powered transceiver 20 is attachable. This data can be, for example, a code or identifier ID, or a set of configuration data according to the user preferences, of the electronic device 30 attached to the second-end powered transceiver 20. This data can be used, for example, by the first-end powering transceiver 10 to know with which second-end powered transceiver 20 it is communicating or which configuration for a specific application should be used according to the user preferences. The memory 40 may be used by any application implemented in either, the second-end powered transceiver 20, for example in the second-end ECU, or the first-end powering transceiver 10, in order to perform internal operations requiring, for example, the temporal storing data received by a sensor, or sending data to the first-end powering transceiver 10. Depending of the kind of memory 40 chosen, this memory 40 may be as well powered from the power of the RF signal emitted by the first-end antenna 102 of the first-end powering transceiver 10.

The second-end powered transceiver 20 may comprise energy storing means, for example a battery 50, configured to be rechargeable from power of the RF signal emitted by the first-end antenna 102 of the first-end powering transceiver 10. The stored energy may be used to power the electronic devices 30 connected to the second-end powered transceiver 20, when the interior part is not attached to the vehicle, and then the second-end powered transceiver 20 is out of the operation range of the first-end powering transceiver 10. While the second-end powered transceiver 20 is within the operation range of the first-end powering transceiver 10, and therefore the wireless coupling is in operation, the energy storing means collects from the first-end powering transceiver 10 as much energy/power as possible. Similarly, when the second-end powered transceiver 20 is not in the operation range of the first-end powering transceiver 10, the electronic devices 30 connected to the second-end powered transceiver 20 use the energy previously stored in the energy storing means. Memory 40 can also obtain the power it needs from the energy storing means.

In embodiments of the invention, the first-end antenna 102 and the second-end antenna 202 are respectively implemented by means of a loop. It has been observed that the antenna geometry that generates the largest electromagnetic field, and therefore is capable of transmitting energy at a greater distance, is the loop geometry. Figure 3 shows a possible implementation of an antenna loop, suitable for both the first-end antenna 102 and the second-end antenna 202.

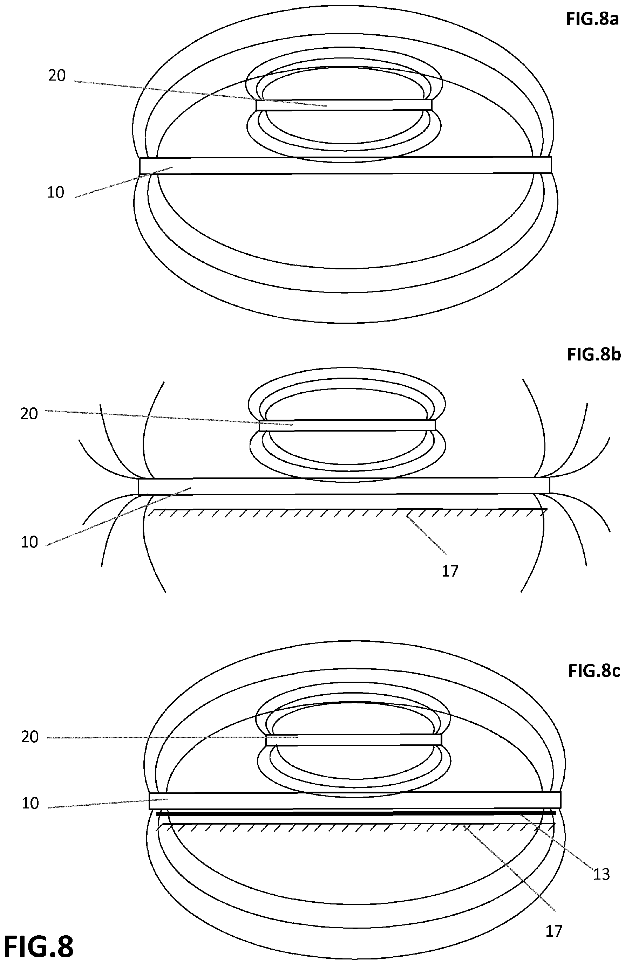

As shown in figures 8a-8c, in some embodiments, when metal parts 17 are close to, or surrounding the wireless coupling, in order to prevent too much dispersion of the electromagnetic field generated by the first-end powering transceiver 10 (see figure 8b), a ferrite 13 can be advantageously disposed close to the first-end antenna 102, improving this way, its global efficiency, that is, the signal quality and the amount of power transmitted from the first-end powering transceiver 10, to the second-end powered transceiver 20. The ferrite has the effect of confining the electromagnetic field emitted by the first-end powering transceiver towards the second-end antenna of the second-end powered transceiver (see figure 8c).

The electronic device 30 comprised in the vehicle interior part and connected to the second-end powered transceiver 20 may be, for example, a sensor, such as a pressure sensor, a temperature sensor, a presence sensor, an actuator, such as a push button or a tactile actuator, a lighting or signaling component, a display, a tablet, etc. For example, a light console may have for example two push buttons, which are electronic devices 30 connected to a second-end powered transceiver 20. This way, the status of the light console (on/off) may be registered (stored) in the memory 40 of the second-end powered transceiver 20, because the status of the light console is determined by the push buttons, for example, pressed or released. So that, the status of the light console is one of the specific data that the second-end powered transceiver 20 may send via a RF signal emitted in this case by the second-end antenna 202 to the first-end antenna 102 associated to the first-end powering transceiver 10. The light console may have also a battery 50. The battery 50 may be another electronic device 30 connected to a second-end powered transceiver 20. The battery 50 of the light console may also be rechargeable by part of the power received by the second-end powered transceiver 20 from the first-end powering transceiver 10. Because the battery 50 is connected to the second-end powered transceiver 20, the status of the battery 50 or a level of charge (for example represented by several bits) is registered (stored) in the memory 40 of the second-end powered transceiver 20. So that, the status or level of the battery 50 is another specific data that the second-end powered transceiver 20 may send via the RF signal to the first-end powering transceiver 10, for example, when the first-end powering transceiver 10 interrogates the second-end powered transceiver 20.

The wireless coupling of this disclosure is designed to be installed in the vehicle interior. The vehicle may comprise several vehicle interior parts. At least one of the vehicle interior part comprises an electronic device 30. The first-end powering transceiver 10 of the wireless coupling device is located in a fixed position within the vehicle, while the second-end powered transceiver 20 of the wireless coupling device is attached to the vehicle interior part.

## Claims

1. A wireless coupling, based on NFC technology, working at a given transmission frequency, for coupling a vehicle with an electronic device (30) disposed in a vehicle interior part for simultaneously feeding said electronic device (30) from said vehicle, and data exchanging between both of them, the wireless coupling comprising:
a first-end powering transceiver (10) located in a fixed position within the vehicle and showing certain first-end impedance Z₁ when working at the transmission frequency, the first-end powering transceiver (10) comprising
connection means (12) electrically connectable to a wiring system of the vehicle,
a first-end ECU (11),
a first-end RF transceiving means (14),
a first-end EMC filter (16), and
a first-end antenna (102) with a theoretical first-end antenna impedance Z₁ₜₐ at the transmission frequency;
a second-end powered transceiver (20, 20') configured to be disposed in the vehicle interior part in which said electronic device (30) is disposed, said electronic device (30) being connected to the second-end powered transceiver (20, 20') and showing certain second-end impedance Z₂ when working at the transmission frequency, said second-end powered transceiver (20, 20') being configured to operate in a radiofrequency range emitted by the first-end antenna (102) of the first-end powering transceiver (10), the second end powered transceiver (20, 20') comprising
a second-end RF transceiving means (24), and
a second-end antenna (202) with a theoretical second-end antenna impedance Z₂ₜₐ at the transmission frequency;
the wireless coupling being **characterized in that** it further comprises a matching circuit (15) with an impedance Zc, the matching circuit (15) being comprised either in the first-end powering transceiver (10) or in the second-end powered transceiver (20, 20'), said matching circuit (15) being arranged to compensate any deviation from the theoretical first-end antenna impedance Z₁ₜₐ, or from the theoretical second-end antenna impedance Z₂ₜₐ, due to real working conditions, the matching circuit (15) being connected to the first-end antenna (102) or to the second-end antenna (202), this first-end antenna (102) or second-end antenna (202), having respectively a first-end antenna design impedance Z_{1da} or a second-end antenna design impedance Z_{2da}, more inductive than the corresponding theoretical first-end antenna impedance Z₁ₜₐ or than the theoretical second-end antenna impedance Z₂ₜₐ, such that the combination of the design first-end antenna impedance Z_{1da}, or of the design second-end antenna impedance Z_{2da}, and the impedance Z_{c} of the matching circuit (15) matches the theoretical first-end antenna impedance Z₁ₜₐ or the theoretical second-end antenna impedance Z₂ₜₐ.

2. The wireless coupling of claim 1, wherein the second-end powered transceiver (20, 20') comprises a second-end ECU (21).

3. The wireless coupling of any preceding claim wherein the vehicle interior part is detachable from the vehicle.

4. The wireless coupling of any preceding claim, wherein the data exchanging between the first-end powering transceiver (10) and the second-end powered transceiver (20, 20') comprises data and/or instructions transmission from the vehicle to the electronic device (30) of the vehicle interior part.

5. The wireless coupling of any preceding claim, wherein the data exchanging between the second-end powered transceiver (20, 20') and the first-end powering transceiver (10) comprises data and/or instructions transmission from the electronic device (30) of the vehicle interior part to the vehicle.

6. The wireless coupling of any preceding claim, wherein the first-end powering transceiver (10) and the second-end powered transceiver (20, 20') are configured to exchange data and/or instructions in a bidirectional way.

7. The wireless coupling of any preceding claim, wherein the first-end powering transceiver (10) is configured to passively detect and/or identify the second-end powered transceiver (20,20'), when they are coupled to each other.

8. The wireless coupling according to claim 7, wherein the first-end powering transceiver (10) is configured to passively identify the second-end powered transceiver (20, 20') as a RFID tag.

9. The wireless coupling of any preceding claim, wherein said first-end antenna (102) and/or said second-end antenna (202) are respectively implemented by means of a loop.

10. The wireless coupling of any preceding claim, wherein the second-end powered transceiver (20, 20') comprises a memory (40) configured to store data related to the second-end powered transceiver (20, 20') and/or to the electronic device (30).

11. The wireless coupling of any preceding claim, wherein the second-end powered transceiver (20, 20') comprises a battery (50) configured to be rechargeable from power of the RF signal emitted by the first-end antenna (102) of the first-end powering transceiver (10).

12. The wireless coupling of any preceding claim, wherein the impedance matching circuit (15) is self-adjusting, tuning its capacitive impedance to compensate any mismatch related to impedance variations due to design, environmental, or ageing factors.

13. The wireless coupling of any preceding claim, wherein the impedance matching circuit (15) is comprised in the first-end powering transceiver (10).

14. The wireless coupling of any preceding claim, wherein the first-end powering transceiver (10) comprises a ferrite (13) configured close to the first-end antenna (102) to confine the electromagnetic field emitted by the first-end powering transceiver (10) towards the second-end antenna (202).

15. The wireless coupling of any preceding claim, wherein the first-end antenna (102) is longer than the second-end antenna (202), configured for either, admitting different positions of a single second-end antenna (202), or simultaneously coupling several second-end antennas (202, 202').

16. The wireless coupling of any preceding claim, wherein the first-end powering transceiver (10) comprises a plurality of first-end antennas (1021, 1022, 1023, 1024), covering a surface larger than that of the second-end antenna (202), configured for either, admitting different positions of a single second-end antenna (202), or simultaneously coupling several second-end antennas (202, 202').

17. A vehicle comprising a vehicle part comprising an electronic device (30), the vehicle further comprising the wireless coupling of any preceding claim, wherein said first-end powering transceiver (10) is located in a fixed position within the vehicle and said second-end powered transceiver (20, 20') is attached to said vehicle interior part.

## Patentansprüche

1. Eine drahtlose Kopplung, basierend auf NFC-Technologie, die bei einer gegebenen Übertragungsfrequenz arbeitet, zur Kopplung eines Fahrzeugs mit einer elektronischen Vorrichtung (30) angeordnet in einem Innenteil des Fahrzeugs, um gleichzeitig die elektronische Vorrichtung (30) von dem Fahrzeug zu speisen, und Daten zwischen beiden auszutauschen, die drahtlose Kopplung umfassend:
einen ein erstes Ende antreibenden Transceiver (10), der sich in einer festen Position innerhalb des Fahrzeugs befindet und eine bestimmte Impedanz Z1 des ersten Endes zeigt, wenn bei der Übertragungsfrequenz gearbeitet wird, der das erste Ende antreibende Transceiver (10), umfassend
Verbindungsmittel (12), das elektrisch mit einem Verkabelungssystem des Fahrzeugs verbunden ist,
eine ECU des ersten Endes (11),
eine RF-Empfangsmittel des ersten Endes (14),
einen EMV-Filter des ersten Endes (16), und
eine Antenne des ersten Endes (102) mit einer theoretischen Antennenimpedanz Z1ta des ersten Endes bei der Übertragungsfrequenz;
einen am zweiten Ende angetriebenen Transceiver (20, 20'), der konfiguriert ist, um in dem Innenteil des Fahrzeugs angeordnet zu sein, in dem die elektronische Vorrichtung (30) angeordnet ist, wobei die genannte elektronische Vorrichtung (30) mit dem am zweiten Ende angetriebenen Transceiver (20, 20') verbunden ist und eine bestimmte Impedanz Z2 am zweiten Ende zeigt, wenn bei der Übertragungsfrequenz gearbeitet wird, wobei der am zweiten Ende angetriebene Transceiver (20, 20') so konfiguriert ist, dass er in einem Radiofrequenzbereich arbeitet, der von der Antenne des ersten Endes (102) des am ersten Ende angetriebenen Transceivers (10) ausgestrahlt wird, der am zweiten Ende angetriebenen Transceiver (20', 20) umfassend
ein HF-Transceivermittel des zweiten Endes (24), und
eine Antenne des zweiten Endes (202) mit einer theoretischen
Antennenimpedanz Z2ta des zweiten Endes bei der
Übertragungsfrequenz;
die drahtlose Kopplung ist **dadurch gekennzeichnet, dass** sie ferner eine Anpassungsschaltung (15) mit einer Impedanz Zc umfasst,
wobei die Anpassungsschaltung (15) entweder in dem das erste Ende angetriebenen Transceiver (10) oder in dem am zweiten Ende angetriebenen Transceiver (20', 20) enthalten ist,
wobei die Anpassungsschaltung (15) eingerichtet ist, um jegliche Abweichung von der theoretischen Antennenimpedanz Z1ta des ersten Endes oder von der theoretischen Antennenimpedanz Z2ta des zweiten Endes aufgrund realer Arbeitsbedingungen zu kompensieren,
wobei die Anpassungsschaltung (15) mit der Antenne des ersten Endes (102) oder mit der Antenne des zweiten Endes (202) verbunden ist,
wobei die Antenne des ersten Endes (102) oder die Antenne des zweiten Endes (202), jeweils mit einer Antennenentwurfsimpedanz Z1da des ersten Endes oder einer Antennenentwurfsimpedanz Z2da des zweiten Endes, induktiver als die entsprechende theoretische Antennenimpedanz Z1ta des ersten Endes oder als die theoretische Antennenimpedanz des zweiten Endes Z2ta ist, so dass die Kombination der Entwurfsantennenimpedanz Z1 da des ersten Endes oder der Entwurfsantennenimpedanz Z2da des zweiten Endes und der Impedanz Zc der Anpassungsschaltung (15) der theoretischen Antennenimpedanz Z1ta des ersten Endes oder der theoretischen Antennenimpedanz des zweiten Endes Z2ta entspricht.

2. Die drahtlose Kopplung nach Anspruch 1, wobei der am zweiten Ende angetriebene Transceiver (20', 20) eine ECU des zweiten Endes (21) umfasst.

3. Die drahtlose Kopplung nach einem der vorhergehenden Ansprüche, wobei der Innenteil des Fahrzeugs abnehmbar ist.

4. Die drahtlose Kopplung nach einem der vorhergehenden Ansprüche, wobei der Datenaustausch zwischen dem das erste Ende antreibenden Transceiver (10) und dem am zweiten Ende angetriebenen Transceiver (20, 20') eine Daten- und / oder Anweisungsübertragung vom Fahrzeug zur elektronischen Vorrichtung (30) des Innenteils des Fahrzeugs umfasst.

5. Die drahtlose Kopplung nach einem der vorhergehenden Ansprüche, wobei der Datenaustausch zwischen dem am zweiten Ende angetriebenen Transceiver (20, 20') und dem das erste Ende antreibenden Transceiver (10) eine Daten- und / oder Anweisungsübertragung von der elektronischen Vorrichtung (30) des Innenteils des Fahrzeugs zum Fahrzeug umfasst.

6. Die drahtlose Kopplung nach einem der vorhergehenden Ansprüche, wobei der das erste Ende antreibende Transceiver (10) und der am zweiten Ende angetriebene Transceiver (20', 20) so konfiguriert sind, um Daten und/oder Anweisungen bidirektional auszutauschen.

7. Die drahtlose Kopplung nach einem der vorhergehenden Ansprüche, wobei der das erste Ende antreibende Transceiver (10) konfiguriert ist, um den am zweiten Ende angetriebenen Transceiver (20', 20) passiv zu erfassen und/oder zu identifizieren, wenn sie miteinander gekoppelt sind.

8. Die drahtlose Kopplung nach Anspruch 7, der das erste Ende antreibende Transceiver (10) konfiguriert ist, um den am zweiten Ende angetriebenen Transceiver (20', 20) passiv als RFID-Tag zu identifizieren.

9. Die drahtlose Kopplung nach einem der vorhergehenden Ansprüche, wobei der genannte Antenne des ersten Endes (102) und/oder der genannte Antenne des zweiten Endes (202) jeweils mittels einer Schleife implementiert sind.

10. Die drahtlose Kopplung nach einem der vorhergehenden Ansprüche, wobei der am zweiten Ende angetriebene Transceiver (20', 20) einen Speicher (40) umfasst, der zum Speichern von Daten konfiguriert ist, die sich auf den am zweiten Ende angetriebenen Transceiver (20', 20) und/oder auf die elektronische Vorrichtung (30) beziehen.

11. Die drahtlose Kopplung nach einem der vorhergehenden Ansprüche, wobei der am zweiten Ende angetriebene Transceiver (20', 20) eine Batterie (50) umfasst, die konfiguriert ist, um aus der Leistung des von der Antenne des ersten Endes (102) des das erste Ende antreibenden Transceivers (10) ausgesendeten HF-Signals wiederaufladbar zu sein.

12. Die Drahtlose Kopplung nach einem der vorhergehenden Ansprüche, wobei die Impedanzanpassungsschaltung (15) selbst einstellend ist und ihre kapazitive Impedanz so einstellt, dass Fehlanpassungen aufgrund von Impedanzschwankungen wegen Design-, Umgebungs- oder Alterungsfaktoren ausgeglichen werden.

13. Die drahtlose Kopplung nach einem der vorhergehenden Ansprüche, wobei die Impedanzanpassungsschaltung (15) in dem das erste Ende antreibenden Transceiver (10) enthalten ist.

14. Die drahtlose Kopplung nach einem der vorhergehenden Ansprüche, wobei der das erste Ende antreibende Transceiver (10) einen Ferrit (13) umfasst, der nahe der Antenne (102) des ersten Endes konfiguriert ist, um das vom das erste Ende antreibende Transceiver (10) emittierte elektromagnetische Feld zur Antenne des zweiten Endes (202) zu beschränken.

15. Die drahtlose Kopplung nach einem der vorhergehenden Ansprüche, wobei die Antenne des ersten Endes (102) länger ist als die Antenne des zweiten Endes (202), die entweder zum Zulassen unterschiedlicher Positionen einer einzelnen Antenne des zweiten Endes (202) oder zum gleichzeitigen Koppeln mehrerer Antennen des zweiten Endes (202, 202') konfiguriert ist.

16. Die drahtlose Kopplung nach einem der vorhergehenden Ansprüche, der das erste Ende antreibenden Transceiver (10) mehrere Antennen des ersten Endes (1021, 1022, 1023, 1024) umfasst, die eine Oberfläche abdecken, die größer als die der Antenne des zweiten Endes (202) ist, die entweder zum Zulassen unterschiedlicher Positionen einer einzelnen Antenne des zweiten Endes (202) oder zum gleichzeitigen Koppeln mehrerer Antennen des zweiten Endes (202, 202') konfiguriert ist.

17. Ein Fahrzeug, umfassend ein Fahrzeugteil, umfassend eine elektronische Vorrichtung (30), wobei das Fahrzeug ferner die drahtlose Kopplung nach einem der vorhergehenden Ansprüche umfasst, wobei sich der genannte das erste Ende antreibende Transceiver (10) in einer festen Position innerhalb des Fahrzeugs befindet und der am zweiten Ende angetriebene Transceiver (20, 20') an dem Innenteil des Fahrzeugs angebracht ist.

## Revendications

1. Couplage sans fil, basé sur la technologie CCP, travaillant sous une fréquence de transmission donnée, destiné à coupler un véhicule à un dispositif électronique (30) disposé dans une partie intérieure de véhicule pour alimenter simultanément ledit dispositif électronique (30) depuis ledit véhicule et échanger des données entre eux deux, le couplage sans fil comprenant :
un émetteur-récepteur alimentant de première extrémité (10) situé en une position fixe à l'intérieur du véhicule et montrant une certaine impédance de première extrémité Z₁ lorsqu'il travaille sous la fréquence de transmission, l'émetteur-récepteur alimentant de première extrémité (10) comprenant
un moyen de raccordement (12) pouvant être électriquement raccordé à un système de câblage du véhicule,
une UCE de première extrémité (11),
un moyen d'émission-réception RF de première extrémité (14),
un filtre CEM de première extrémité (16), et
une antenne de première extrémité (102) avec une impédance d'antenne de première extrémité Z₁ₜₐ théorique sous la fréquence de transmission ;
un émetteur-récepteur alimenté de seconde extrémité (20, 20') configuré pour être disposé dans la partie intérieure de véhicule dans laquelle ledit dispositif électronique (30) est disposé, ledit dispositif électronique (30) étant raccordé à l'émetteur-récepteur alimenté de seconde extrémité (20, 20') et montrant une certaine impédance de seconde extrémité Z₂ lorsqu'il travaille sous la fréquence de transmission, l'émetteur-récepteur alimenté de seconde extrémité (20, 20') étant configuré pour fonctionner dans un spectre de radiofréquences émis par l'antenne de première extrémité (102) de l'émetteur-récepteur alimentant de première extrémité (10), l'émetteur-récepteur alimenté de seconde extrémité (20, 20') comprenant
un moyen d'émission-réception RF de seconde extrémité (24), et
une antenne de seconde extrémité (202) avec une impédance d'antenne de seconde extrémité Z₂ₜₐ théorique sous la fréquence de transmission ;
le couplage sans fil étant **caractérisé en ce qu'**il comprend en outre un circuit d'adaptation (15) avec une impédance Z_{C}, le circuit d'adaptation (15) étant compris soit dans l'émetteur-récepteur alimentant de première extrémité (10) soit dans l'émetteur-récepteur alimenté de seconde extrémité (20, 20'), ledit circuit d'adaptation (15) étant agencé pour compenser tout écart par rapport à l'impédance d'antenne de première extrémité Z₁ₜₐ théorique ou à l'impédance d'antenne de seconde extrémité Z₂ₜₐ théorique, du fait de conditions de travail réelles, le circuit d'adaptation (15) étant raccordé à l'antenne de première extrémité (102) ou à l'antenne de seconde extrémité (202), cette antenne de première extrémité (102) ou antenne de seconde extrémité (202) présentant respectivement une impédance de conception d'antenne de première extrémité Z_{1da} ou une impédance de conception d'antenne de seconde extrémité Z_{2da} plus inductive que l'impédance d'antenne de première extrémité Z₁ₜₐ théorique ou que l'impédance d'antenne de seconde extrémité Z₂ₜₐ théorique correspondantes, de sorte que la combinaison de l'impédance d'antenne de première extrémité de conception Z_{1da} ou de l'impédance d'antenne de seconde extrémité de conception Z_{2da} avec l'impédance Zc du circuit d'adaptation (15) s'adapte à l'impédance d'antenne de première extrémité Z₁ₜₐ théorique ou à l'impédance d'antenne de seconde extrémité Z₂ₜₐ théorique.

2. Couplage sans fil selon la revendication 1, dans lequel l'émetteur-récepteur alimenté de seconde extrémité (20, 20') comprend une UCE de seconde extrémité (21).

3. Couplage sans fil selon l'une quelconque des revendications précédentes, dans lequel la partie intérieure de véhicule est amovible du véhicule.

4. Couplage sans fil selon l'une quelconque des revendications précédentes, dans lequel l'échange de données entre l'émetteur-récepteur alimentant de première extrémité (10) et l'émetteur-récepteur alimenté de seconde extrémité (20, 20') comprend une transmission de données et/ou d'instructions depuis le véhicule vers le dispositif électronique (30) de la partie intérieure de véhicule.

5. Couplage sans fil selon l'une quelconque des revendications précédentes, dans lequel l'échange de données entre l'émetteur-récepteur alimenté de seconde extrémité (20, 20') et l'émetteur-récepteur alimentant de première extrémité (10) comprend une transmission de données et/ou d'instructions depuis le dispositif électronique (30) de la partie intérieure de véhicule vers le véhicule.

6. Couplage sans fil selon l'une quelconque des revendications précédentes, dans lequel l'émetteur-récepteur alimentant de première extrémité (10) et l'émetteur-récepteur alimenté de seconde extrémité (20, 20') sont configurés pour échanger des données et/ou des instructions de manière bidirectionnelle.

7. Couplage sans fil selon l'une quelconque des revendications précédentes, dans lequel l'émetteur-récepteur alimentant de première extrémité (10) est configuré pour passivement détecter et/ou identifier l'émetteur-récepteur alimenté de seconde extrémité (20, 20') lorsqu'ils sont couplés l'un à l'autre.

8. Couplage sans fil selon la revendication 7, dans lequel l'émetteur-récepteur alimentant de première extrémité (10) est configuré pour passivement identifier l'émetteur-récepteur alimenté de seconde extrémité (20, 20') en tant qu'étiquette RFID.

9. Couplage sans fil selon l'une quelconque des revendications précédentes, dans lequel ladite antenne de première extrémité (102) et/ou ladite antenne de seconde extrémité (202) sont respectivement mises en œuvre au moyen d'une boucle.

10. Couplage sans fil selon l'une quelconque des revendications précédentes, dans lequel l'émetteur-récepteur alimenté de seconde extrémité (20, 20') comprend une mémoire (40) configurée pour stocker des données relatives à l'émetteur-récepteur alimenté de seconde extrémité (20, 20') et/ou au dispositif électronique (30).

11. Couplage sans fil selon l'une quelconque des revendications précédentes, dans lequel l'émetteur-récepteur alimenté de seconde extrémité (20, 20') comprend une pile (50) configurée pour être rechargeable depuis l'alimentation du signal RF émis par l'antenne de première extrémité (102) de l'émetteur-récepteur alimentant de première extrémité (10).

12. Couplage sans fil selon l'une quelconque des revendications précédentes, dans lequel le circuit d'adaptation (15) d'impédance est autoréglable, accordant son impédance capacitive pour compenser toute désadaptation relative à des variations d'impédance dues à des facteurs de conception, d'environnement ou de vieillissement.

13. Couplage sans fil selon l'une quelconque des revendications précédentes, dans lequel le circuit d'adaptation (15) d'impédance est compris dans l'émetteur-récepteur alimentant de première extrémité (10).

14. Couplage sans fil selon l'une quelconque des revendications précédentes, dans lequel l'émetteur-récepteur alimentant de première extrémité (10) comprend une ferrite (13) configurée proche de l'antenne de première extrémité (102) pour confiner le champ électromagnétique émis par l'émetteur-récepteur alimentant de première extrémité (10) en direction de l'antenne de seconde extrémité (202).

15. Couplage sans fil selon l'une quelconque des revendications précédentes, dans lequel l'antenne de première extrémité (102) est plus longue que l'antenne de seconde extrémité (202), configurée pour soit admettre des positions différentes d'une unique antenne de seconde extrémité (202) soit coupler simultanément plusieurs antennes de seconde extrémité (202, 202').

16. Couplage sans fil selon l'une quelconque des revendications précédentes, dans lequel l'émetteur-récepteur alimentant de première extrémité (10) comprend une pluralité d'antennes de première extrémité (1021, 1022, 1023, 1024) couvrant une surface plus grande que celle de l'antenne de seconde extrémité (202), configurées pour soit admettre des positions différentes d'une unique antenne de seconde extrémité (202) soit coupler simultanément plusieurs antennes de seconde extrémité (202, 202').

17. Véhicule comprenant une partie de véhicule comprenant un dispositif électronique (30), le véhicule comprenant en outre le couplage sans fil selon l'une quelconque des revendications précédentes, dans lequel ledit émetteur-récepteur alimentant de première extrémité (10) est situé en une position fixe à l'intérieur du véhicule et ledit émetteur-récepteur alimenté de seconde extrémité (20, 20') est fixé contre ladite partie intérieure de véhicule.
